# EUROPÄISCHE PATENTSCHRIFT

(11) **EP 3 195 207 B1**
(45) Veröffentlichungstag und Bekanntmachung des Hinweises auf die Patenterteilung: **19.02.2020**
(21) Anmeldenummer: 15784756.7
(22) Anmeldetag: 15.09.2015
(51) Int. Cl.: G06K 17/00

(54) **VERFAHREN UND ANORDNUNG ZUR DATENÜBERTRAGUNG**
METHOD AND SYSTEM FOR DATA TRANSMISSION
PROCÉDÉ ET SYSTÈME DE TRANSMISSION DE DONNÉES

(30) Priorität: 16.09.2014 DE 102014013396
(43) Veröffentlichungstag der Anmeldung: 26.07.2017
(73) Patentinhaber: Rietzler, Manfred, 87616 Marktoberdorf (DE)
(72) Erfinder: Rietzler, Manfred, 87616 Marktoberdorf (DE)
(74) Vertreter: advotec.
(86) Internationale Anmeldenummer: PCT/IB2015/001624
(87) Internationale Veröffentlichungsnummer: WO 2016/042382

(56) Entgegenhaltungen:
- US-A1- 2006 143 439
- US-A1- 2007 120 647

## Beschreibung

Die Erfindung betrifft ein Verfahren zur Übertragung eines in einem Datenspeicherbereich eines unteren Servers gespeicherten Objektdatensatzes zu einem oberen Server, wobei der untere Server und der obere Server in einem zumindest einen oberen Server umfassenden Server-Verbund angeordnet sind, und die Server in vertikal gestaffelten Serverebenen angeordnet sind, wobei die eindeutige Zuordnung des Objektdatensatzes zu einem bestimmten Objekt mittels Adressierung des Server-Datenspeicherbereichs durch einen Zugangsdatensatz erfolgt, der in einem Zugangsdaten-Speicherbereich eines mit dem Objekt verbundenen RFID-Datenträgers abgelegt ist, oder dass der Objektdatensatz aus einem Datenspeicherbereich des RFID-Datenträgers in einen zugeordneten Datenspeicherbereich des unteren Servers übertragen wird, wobei die Übertragung des Objektdatensatzes zum oberen Server durch Zugriff auf den Datenspeicherbereich des unteren Servers erfolgt. Darüber hinaus betrifft die Erfindung eine Anordnung zur Durchführung des Verfahrens.

Es entspricht der gängigen Praxis, Objekte zur Identifizierung mit RFID-Datenträgern zu versehen, die regelmäßig als sogenannte Transpondertags an den betreffenden Produkten oder Gegenständen angeordnet oder auch als Injektionstransponder subkutan Lebewesen implantiert werden.

Neben der Eigenschaft als Identifikationsmittel dienen RFID-Datenträger auch allgemein als Informationsträger, die beispielsweise Daten zur Definition besondere Eigenschaften der Objekte oder Daten enthalten, die eine Zuordnung der Objekte ermöglichen, also insbesondere Angaben über den Hersteller oder Eigentümer der Objekte umfassen. Es liegt nun möglicherweise im Interesse des Besitzers oder Eigentümers des mit dem RFID-Datenträger versehenen Objektes, dass nicht sämtliche Informationen bzw. Daten, die auf dem Datenträger gespeichert sind, uneingeschränkt einem offenen Nutzerkreis zur Verfügung stehen, sondern, dass der Umfangs und die Art der zur Verfügung stehenden Informationen auf die möglichen Empfänger abgestimmt werden. Beispielsweise sollen in der Regel Produktinformationen über den Herstellungspreis und den Zwischenhandel regelmäßig nicht dem Endkunden, der im Einzelhandel das Produkt erwirbt zur Verfügung stehen. Anderseits liegt es im Interesse des Produktherstellers, dass etwa dem Endkunden Informationen darüber zur Verfügung stehen, die eine Lokalisierung des Produkt ermöglichen, etwa, um ein verlorenes oder gestohlenes Objekt wieder aufzufinden.

Eine Möglichkeit das vorstehend erläuterte Bedürfnis nach Differenzierung hinsichtlich Umfang der Informationen und Begrenzung eines möglichen Empfängerkreises zu erfüllen, besteht darin, einem Objekt mehrere RFID-Datenträger zuzuordnen und den Zugriff auf die jeweiligen Datenträger dadurch einzuschränken, dass voneinander unabhängige Datenverbindungen zwischen jedem RFID-Datenträger und jeweils einem zugeordneten Empfängerkreis installiert werden. Als nachteilig erweist sich hieran einerseits, dass an einem Objekt mehrere RFID-Datenträger angeordnet werden müssen, und andererseits, dass derart ein statisches Informationssystem ausgebildet wird, da Änderungen hinsichtlich der Art und des Umfangs der den jeweiligen Empfängerkreisesn zur Verfügung gestellten Informationen sich nicht möglich sind. Vielmehr wäre hierzu ein Austausch der RFID-Datenträger notwendig.

Dokumente US2006/0143439-A1 und US2007/0120647-A1 offenbaren Systeme und Verfahren zur Echtzeitverwaltung von Sensordaten.

Der vorliegenden Erfindung liegt daher die Aufgabe zugrunde, ein Verfahren sowie eine Anordnung zur Übertragung von auf einem RFID-Datenträger gespeicherten Informationen vorzuschlagen, derart, dass zur Ausbildung eines dynamischen Informationssystems die Übertragung von auf einem RFID-Datenträger gespeicherten Daten hinsichtlich der Art und des Umfangs der Daten und des Empfängerkreises der Daten veränderbar ist.

Diese Aufgabe wird durch ein Verfahren gemäß dem Anspruch 1 gelöst.

Bei dem erfindungsgemäßen Verfahren wird zumindest einem Datensatz zwischen einem RFID-Datenträger und einem Server-Verbund übertragen, wobei der Server-Verbund einen unteren Server und zumindest einen oberen Server aufweist, wobei die Server in vertikal gestaffelten Serverebenen angeordnet sind, und die Datenübertragung eines Objektdatensatzes zu dem oberen Server mittelbar über den unteren Server erfolgt, derart, dass der zum RFID-Datenträger bzw. zum Objekt gehörige Datensatz einem Datenspeicherbereich des unteren Servers zugeordnet wird, und die Übertragung des Datensatzes zum oberen Server durch Zugriff auf den Datenspeicherbereich des unteren Servers erfolgt. Vorzugsweise ist der RFID-Datenträger mit einer Kennung zur Identifikation des RFID-Datenträgers versehen.

Bei den Objekten, die Gegenstand der Anwendung des erfindungsgemäßen Verfahrens sind, kann es sich neben Sachgegenständen auch um Lebewesen, insbesondere auch Personen, handeln.

Bei dem erfindungsgemäße Verfahren bilden die vertikal oder hierarchisch angeordneten Server miteinander vernetzte "Cloud-Server" unterschiedlicher Ordnung, so dass der untere Server auch als Cloud-Server 1. Ordnung und der nachfolgende erste obere Server auch als Cloud-Server 2. Ordnung usw. bezeichnet werden könnten. Die erfindungsgemäße vertikale Serverstruktur eröffnet neue Möglichkeiten zur Realisierung des Internets der Dinge ("Internet of Things" oder auch "Internet of Everything"), mit dem eine Einordnung von realen Gegenständen oder Personen in die virtuelle Welt möglich wird.

Das erfindungsgemäße Verfahren ermöglicht die Verwendung des Datenspeicherbereichs des unteren Servers als Mailbox in der Kommunikation zwischen dem RFID-Datenträger und dem oberen Server. Zum einen ist damit ein unmittelbarer Zugriff vom oberen Server auf einen auf dem RFID-Datenträger gespeicherten Datensatz nicht möglich. Vielmehr bestimmt der Administrator des unteren Servers, welche der im Datenspeicherbereich des untern Servers gespeicherten Daten des Datensatzes des RFID-Datenträgers dem Nutzer des oberen Servers zur Verfügung stehen. Damit können dem Nutzer des unteren Servers sämtliche Daten des RFID-Datensatzes zur Verfügung gestellt werden, wohingegen dem Nutzer des oberen Servers ein entsprechend den Vorgaben des Administrators eingeschränkter Datensatz zur Verfügung steht. Bei einer Erstreckung der Administratorrechte auf oberhalb des unteren Servers angeordnete obere Server kann somit in einem vertikal gestaffelten Server-verbund eine nach oben vom Server zum darüber angeordneten Server zunehmend eingeschränkte Datenmenge übertragen werden. Damit können dem Nutzer, der zum Zugriff auf einen in einer höheren Serverebene angeordneten oberen Server berechtigt ist, andere Daten zur Verfügung gestellt werden als einem Nutzer, der zum Zugriff auf einen in einer darunterliegenden Serverebene angeordneten Server berechtigt ist.

Zur Realisierung der Datenübertragung ergeben sich vereinfachte Möglichkeiten, da mittlerweile die NFC (Near-Field-Communication)- Funktionalität in Mobilfunkgeräte integriert werden kann, um dem Nutzer die Möglichkeit zu eröffnen, allein durch Heranführen eines NFC-fähigen Handys an einen passiven NFC-Datenträger eine Datenverbindung zu einem Netzwerk-Server im globalen Netz herzustellen, mit dem das Handy über seine Funkschnittstelle verbunden ist. Hinsichtlich künftiger Mobilfunkgeräte-Generationen ist somit davon auszugehen, dass eine Vielzahl von Handys mit einer NFC-Datenschnittstelle ausgerüstet sein wird, so dass das Mobilfunkgerät in der Lage ist ein NFC-Datenträger lesen und beschreiben zu können (NFC Reader/Writer Mode) sowie mit gleichrangigen Geräten Informationen zu tauschen (NFC Peer-to-Peer Mode).

Darüber hinaus ist die NFC-Schnittstelle auch so spezifiziert, dass sie zu dem RFID - (Radio Frequency Identification) - Übertragungsstandard ISO 14443 und ISO 15693 kompatibel ist. Damit kann ein NFC-fähiges Gerät zum Lesen von RFID-Datenträgern (RFID-Tags, RFID-Transpondern) verwendet werden.

Vorzugsweise kann für den Fall, dass kein Nutzerzugriff auf den untern Server vorgesehen ist, der untere Server als Gate für die Datenübertragung zwischen dem RFID-Datenträger und dem oberen Server dienen, so dass der untere Server lediglich dazu genutzt wird eine definierte Teilmenge der Daten des RFID-Datensatzes an den oberen Server zu übertragen.

Eine Anwendung des Verfahrens für eine Vielzahl unterschiedlicher Objekte ist besonders vorteilhaft ausführbar, wenn der untere Server eine Mehrzahl von einem Objekt zugeordneten Objektdaten oder Objektdatensätzen aufweist, wobei die Objektdaten mittels eines RFID-Datenträgers einem Objekt und die Objektdatensätze mittels einer entsprechenden Anzahl von RFID-Datenträgern einer Mehrzahl unterschiedlicher Objekte eindeutig zugeordnet sind, wobei lediglich der untere Server einen Zugriff auf sämtliche Objektdaten oder Objektdatensätze ermöglicht, und die oberen Server jeweils nur einen Zugriff auf definierte Objektdaten oder Objektdatensätze ermöglichen.

Eine besonders vorteilhafte hierarchische Zugriffsordnung wird möglich, wenn die Anzahl der zugelassenen Nutzer des jeweiligen Servers umso größer wird, je weiter oben der jeweilige Server in dem vertikalen Server-Verbund angeordnet ist.

Wenn dem RFID-Datenträger ein Datenspeicherbereich auf dem unteren Server zugeordnet ist, und ein Zugriff auf einen Datenspeicherbereich des RFID-Datenträgers über einen Adressbereich des unteren Servers erfolgt, kann der untere Server nicht nur, wie vorstehend beschrieben, als Mailbox für den RFID-Datenträger dienen, sondern der Datenspeicherbereich des RFID-Datenträgers kann über den unteren Server adressiert werden, um den RFID-Datensatz zu verändern.

Vorzugsweise erfolgt ein Zugriff auf den Adressbereich des unteren Servers über einen RFID-Administrator, also etwa den zum Zugriff auf den RFID-Datenträgers berechtigten Eigentümer des RFID-Datenträgers bzw. des mit dem RFID-Darnträger gekennzeichneten Objektes.

Wenn der Zugriff auf den Adressbereich des unteren Servers vom RFID-Administrator auf den oberen Server konfiguriert wird, kann bei Bedarf auch dem Nutzer des oberen Servers ein Zugriff auf den Adressbereich eingerichtet werden, so dass der Nutzer beispielsweise eine Kaufoption auf dem RFID-Datenträger hinterlegen kann.

Wenn die Zuordnung eines RFID-Datensatzes zu dem Datenspeicherbereich des unteren Servers über einen den unteren Server identifizierenden Adressdatensatz erfolgt, ist eine eindeutige Zuordnung zwischen dem RFID-Datenträger und einem bestimmten unteren Server definiert.

Vorzugsweise ist der Adressdatensatz auf dem RFID-Datenträger gespeichert, so dass zur Übertragung des Datensatzes zum Datenspeicherbereich eine standardisierte Übertragungseinrichtung verwendet werden kann, die über keine spezielle Zuordnung, also Adressierung, zum unteren Server verfügen muss, also beispielsweise auch ein Mobilfunkgerät mit einer integrierten NFC (Near Field Communication)-Schnittstelle.

Derartige Übertragungseinrichtungen, die einen drahtlosen Übertragungsweg zwischen zwei nahe aneinander herangeführten Geräten bereitstellen (Nahbereichskommunikation) und über eine Mobilfunkanbindung einen Datentransfer mit einem Netzwerk-Server ermöglichen, sind bereits weitgehend standardisiert. Auf dem Gebiet der Nahbereichskommunikation ist hier vor allem die nach dem als NFC (Near Field Communication) bezeichneten Verfahren spezifizierte Datenschnittstelle zu nennen (ISO/IEC 18092, ISO/IEC 21481), die so spezifiziert ist, dass sie zu dem RFID (Radio Frequency Identification)-Übertragungsstandard ISO 14443 und ISO 15693 kompatible ist, so dass beim Heranführen eines NFC-fähigen Mobilfunkgerätes, das in der Lage ist eine RFID-Schnittstelle zu emulieren, der RFID-Datenträger mit dem vom Mobilfunkgerät ausgesendeten elektromagnetischen Feld derart in Wechselwirkung tritt, dass die auf dem RFID-Datenträger gespeicherte Information ausgelesen und weiterverarbeitet werden kann. In dieser Systemausführung ist der RFID-Datenträger als reine passive Baugruppe ausgeführt, der seine Energie aus dem elektromagnetischen Wechselfeld des die Übertragung initiierenden Mobilfunkgerätes bezieht. Dabei finden der Verbindungsaufbau und die Datenübertragung ohne weitere manuelle Konfiguration der miteinander kommunizierenden Geräte statt.

Grundsätzlich kann die Datenübertragung zwischen dem RFID-Datenträger und dem unteren Server mittels einer zwei Schnittstellen aufweisenden Leseeinrichtung erfolgen, wobei über die erste Schnittstelle eine Datenverbindung zwischen dem RFID-Datenträger und der Leseeinrichtung und über die zweite Schnittstelle eine Datenverbindung zwischen der Leseeinrichtung und dem unteren Server hergestellt wird.

Dabei kann die Zuordnung des RFID-Datensatzes zu dem Datenspeicherbereich des unteren Servers über einen den unteren Server identifizierenden und in der Leseeinrichtung gespeicherten Adressdatensatz erfolgen.

Vorzugsweise dient die Leseeinrichtung nicht nur zur Übertragung des RFID-Datensatzes zum unteren Server, sondern auch zur Datenübertragung zwischen dem Adressbereich des unteren Servers und einem Speicherbereich des RFID-Datenträgers.

Zur eindeutigen Sicherheitskennzeichnung des RFID-Datenträgers kann der Datensatz des RFID-Datenträgers neben einer Kennung des RFID-Datenträgers Authentisierungsdaten aufweisen, die über eine Datenverbindung zwischen dem RFID-Datenträger und einer Authentisierungseinrichtung im Datenspeicherbereich des RFID-Datenträgers hinterlegt werden. So kann beispielsweise eine elektronische Signatur eingerichtet werden, basierend auf einer eindeutigen ID-Nummer des beispielsweise als Tag ausgeführten RFID-Datenträgers, die zur Authentisierung mit einem qualifizierten Zertifikat kombiniert wird.

In einer besonders vorteilhaften Ausführungsform werden die Daten des auf dem RFID-Datenträger gespeicherten Datensatzes unterschiedlichen Speicherplätzen des Datenspeicherbereichs des unteren Servers zugeordnet, und der Administrator definiert individuelle Zugriffsberechtigungen für die Speicherplätze des Datenspeicherbereichs, so dass sichergestellt ist, dass der Nutzer des oberen Server nur Zugriff auf ausgewählte, also vom Administrator frei gegebene Daten hat.

Zur Lösung der der Erfindung zugrunde liegenden Aufgabe weist die erfindungsgemäße Anordnung die Merkmale des Anspruchs 13 auf.

Die erfindungsgemäße Anordnung zur Durchführung eines Verfahrens nach Anspruch 1 umfassend einen Server-Verbund mit einem unteren Server und zumindest einem oberen Server, wobei die Server in vertikal gestaffelten Serverebenen angeordnet und miteinander über Datenverbindungen verbunden sind, wobei der untere Server über eine Datenverbindung mit dem RFID-Datenträger verbunden ist.

Vorzugsweise ist dem RFID-Datenträger ein Datenspeicherbereich auf dem unteren Server zugeordnet, und der untere Server weist einen Adressbereich auf, der zum Zugriff auf einen Datenspeicherbereich des RFID-Datenträgers dient.

Zur Datenübertragung zwischen dem unteren Server und dem RFID-Datenträger dient eine Datenübertragungseinrichtung, die eine Leseeinrichtung mit einer ersten Schnittstelle zur Übertragung des Datensatzes des RFID-Datenträgers zur Leseeinrichtung und eine zweiten Schnittstelle zur Übertragung des Datensatzes von der Leseeinrichtung zum unteren Server aufweist.

Wenn die erste Schnittstelle als NFC-Schnittstelle ausgebildet ist, kann vorzugsweise ein Mobilfunkgerät, insbesondere ein Handy mit integrierter NFC-Schnittstelle als Leseeinrichtung verwendet werden.

Die erste Schnittstelle kann als NFC-Schnittstelle ausgebildet sein, wobei in einer möglichen weiteren Variante die erste Schnittstelle auch als UHF-Schnittstelle ausgebildet sein kann.

Die zweite Schnittstelle ist vorzugsweise als Funkschnittstelle ausgebildet.

Insbesondere dann, wenn die Datenübertragungseinrichtung als Mobilfunkgerät ausgebildet ist, also beispielsweise als Handy ausgebildet ist, ist die Bereitstellung einer Leseeinrichtung ohne besonderen apparativen Aufwand möglich.

Vorzugsweise dient die Leseeinrichtung zur Darstellung des Speichereinhalts oder von Statusinformationen des RFID-Datenträgers und ist entsprechend ausgebildet, so dass die Leseeinrichtung beispielsweise auf einem Display optisch oder über eine Lautsprechereinrichtung akustisch anzeigt, von welcher Serverebene auf den RFID-Datensatz zugegriffen wird, oder auch angezeigt wird, wenn vom Administrator Daten dem RFID-Datensatz hinzugefügt werden.

Wenn der obere Server als Netzwerk-Server eines globalen Netzwerks ausgebildet ist, ist hierdurch eine höchste Serverebene definiert, über die die Gesamtheit der Internet-Nutzer Zugriff auf die vom Administrator bis in die höchste Serverebene frei gegebenen Daten des RFID-Datensatzes hat.

Weitere vorteilhafte Ausgestaltungsmerkmale des Verfahrens und der Anordnung ergeben sich aus der nachfolgenden Beschreibung und den Zeichnungen, die bevorzugte Ausführungsformen der Erfindung beispielhaft erläutern. Es zeigen:
- **Fig. 1:**: eine schematische Darstellung der Anordnung in einer möglichen Ausführungsform der Erfindung;
- **Fig. 2:**: eine schematische Darstellung der Anordnung zur Erläuterung einer Ausführungsvariante.

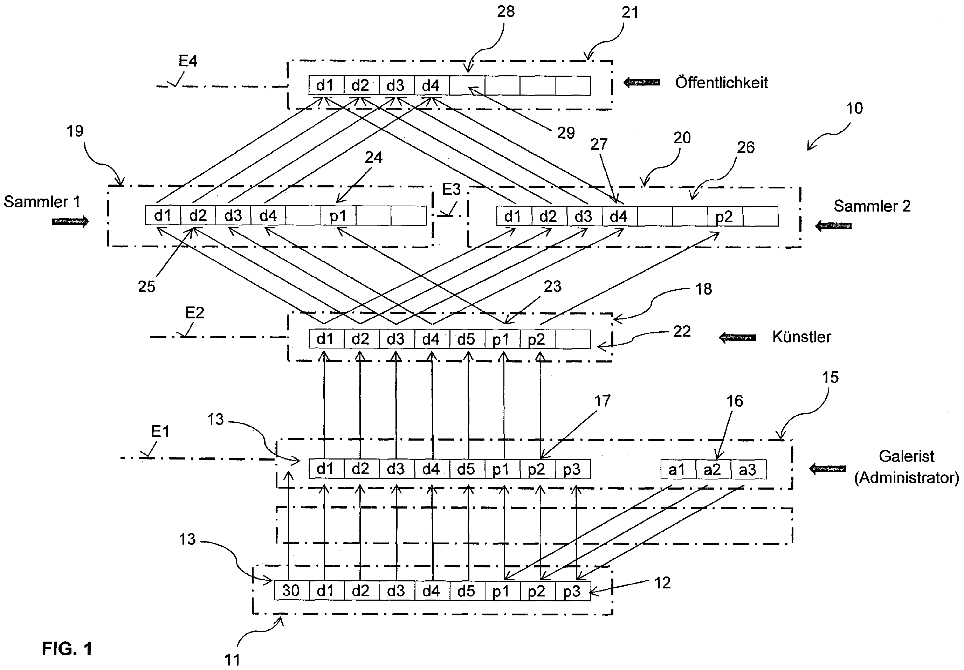

**Fig. 1** zeigt eine schematische Darstellung einer Anordnung 10 mit den wesentlichen die Struktur des Verfahrens bestimmenden Komponenten. Dargestellt ist ein RFID-Datenträger 11, der beispielsweise als so genannter Transponder-Tag ausgebildet sein kann und zur Kennzeichnung eines Kunstobjekts, etwa eines Gemäldes oder einer Skulptur, mit diesem verbunden ist. Der RFID-Datenträger 11 weist einen Datenspeicherbereich 12 auf, der einen Datensatz 13 mit einer Mehrzahl von das Kunstobjekt beschreibenden Daten aufweist, wobei im Fall des vorliegenden Ausführungsbeispiels, das die Anwendung des Verfahrens beim Vertrieb von Kunstobjekten erläutert, die Daten folgende Informationen enthalten: d1:= Galerist; d2:= Künstler; d3:= Werkbeschreibung, d4:= Werkabbildung; d5:= Konditionen, also insbesondere die Höhe der Beteiligung des Künstlers am Verkaufserlös des Galeristen; p1:= Preis 1; p2:= Preis 2; p3:= blacklist.

Der RFID-Datenträger 11 ist über eine beispielsweise als Mobilfunkgerät mit NFC-Schnittstelle ausgebildete Leseeinrichtung 14 mit einem auf einer unteren Serverebene E1 angeordneten unteren Server 15 verbunden, auf den im vorliegenden Fall ausschließlich der Galerist als Administrator Zugriff hat.

Der Datensatz 13 umfasst neben den unmittelbar den dem Kunstobjekt, also beispielsweise einem Gemälde, zugeordneten und das Gemälde charakterisierenden sowie das Verhältnis zwischen dem Künstler einem bestimmtem Galeristen definierenden Daten d1 bis d5 zusätzliche Daten p1 bis p3, die veränderliche Parameter darstellen und welche vom Administrator in einen Adressbereich 16 des unteren Server 15 eingegeben werden können.

Über die Leseeinrichtung 14 werden die Daten p1 bis p3 in den Datenspeicherbereich 12 des RFID-Datenträgers übertragen, so dass der vollständige Datensatz 13 mittels der Leseeinrichtung 14 in einen Datenspeicherbereich 17 des unteren Servers eingelesen werden kann. Der Datenspeicherbereich 17 dient nun als Mailbox für einen in einer oberen Serverebene E2 angeordnete Server 18.

Der obere Server 18 sowie weitere obere Server 19, 20 und der oberste Server 21 sind als Netzwerk-Server ausgebildet und mit dem unteren Server 15 vernetzt. Die Vernetzung der Server 15, 18, 19, 20, 21 kann beispielsweise über das Internet erfolgen, wobei der Administrator über eine Adressierung der oberen Server 18, 19, 20 und des obersten Servers 21 vorgibt, welche Daten des im Datenspeicherbereich 17 des unteren Servers 15 gespeicherten vollständigen RFID-Datensatzes 13 des RFID-Datenträgers 11 an den jeweiligen Server 18, 19, 20 oder 21 übergeben werden. Somit konfiguriert der Administrator den über den jeweiligen Server 18, 19, 20 oder 21 auf den RFID-Datensatz 13 möglichen Datenzugriff.

Im Fall des dargestellten Ausführungsbeispiels besteht auf den in der Serverebene E2 angeordneten Server 18 lediglich ein Zugriffsrecht für den Künstler. Damit hat der Künstler Zugriff auf einen Datenspeicherbereich 22, der einen eingeschränkten Datensatz 23 aufweist, welche ausschließlich die Daten d1 bis d5 und p1,p2 aufweist, die der Administrator, also hier der Galerist, für den Künstler freigegeben hat. Der Künstler hat somit keinen Zugriff auf die Daten p3, welche die "blacklist" umfassen, also Angaben über potentielle Käufer oder Sammler von Kunst, die der Galerist dem Kunstobjekt zugeordnet hat, deren Identität der Galerist dem Künstler jedoch nicht mitteilen möchte.

Der im Datenspeicherbereich 22 gespeicherte Datensatz 23 wird entsprechend der Konfiguration durch den Administrator nur jeweils eingeschränkt an die zwei in der nachfolgenden oberen Serverebene E3 angeordneten Server 19, 20 übermittelt, derart, dass eine erste Gruppe von potentiellen Käufern oder Sammlern 1 über einen Zugriff auf einen Datenspeicherbereich 24 einen Datensatz 25 mit den für Sammler allgemein wichtigen Daten d1 bis d4 zum Kunstobjekt sowie die vom Galeristen für die Gruppe von Sammlern 1 bestimmte Kaufpreisinformation p1 erhält. Eine weitere Gruppe von Sammlern 2 erhält über einen Zugriff auf einen Speicherbereich 26 des Servers 20 einen Datensatz 27, der dieselben Daten d1 bis d4 wie der Datensatz 25, jedoch eine abweichende Kaufpreisinformation p2 aufweist.

Schließlich ist in einer obersten Serverebene E4 der Server 21 angeordnet, für den uneingeschränkter Zugriff für die Öffentlichkeit besteht und der in einem Datenspeicherbereich 28 einen Datensatz 29 aufweist, der nur die das Kunstobjekt charakterisierenden Daten d1 bis d4 ohne die für die Sammler 1 und 2 bestimmten Preisinformationen umfasst.

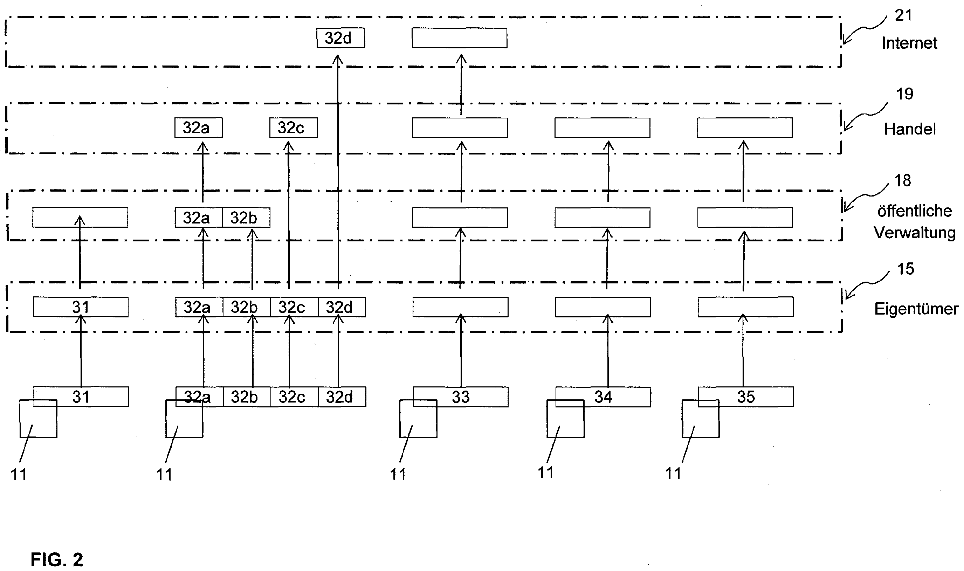

Fig. 2 zeigt eine Ausführungsvariante, bei der der untere Server 15 eine Mehrzahl von unterschiedlichen Objekten zugeordneten Objektdatensätzen 31, 32, 33, 34, 35 aufweist, wobei die Objektdatensätze jeweils mittels eines RFID-Datenträgers 11 einem Objekt eindeutig zugeordnet sind. Im Fall des dargestellten Ausführungsbeispiels betrifft der Objektdatensatz 31 ein Ausweisdokument, der Objektdatensatz 32 ein Kraftfahrzeug, der Objektdatensatz 33 ein Handy, der Objektdatensatz 34 einen Container, der Objektdatensatz 35 eine im Container enthaltenen Ware.

Der untere Server 15, auf den ausschließlich die Eigentümer der Objekte Zugriff haben, umfasst sämtliche Objektdatensätze 31 bis 35. Die Eigentümer konfigurieren durch entsprechende Upward-Links die Zugriffsrechte für die im Server-Verbund vertikal angeordneten oberen Server 18, 19, 21, wobei hier der Server 18 ein ausschließlich im Bereich der öffentlichen Verwaltung zugänglicher Server ist, der Server 19 ausschließlich für einen definierten Händlerverbund und der Server 21 im Internet frei zugänglich ist. Hieraus ergibt sich, dass je weiter oben der jeweilige Server 18, 19, 21 in dem vertikalen Server-Verbund angeordnet ist, desto größer die Anzahl der zugelassenen Nutzer des jeweiligen Servers ist.

Auf die im Objektdatensatz 31 enthaltenen Personaldaten hat beispielsweise außer dem Eigentümer des Ausweisdokumentes nur noch die öffentliche Verwaltung Zugriff. Betreffend die dem Kraftfahrzeug zugeordneten Objektdaten 32 ist ein differenzierter Zugriff eingereichtet, derart, dass über den Server 18 ausschließlich die Halterdaten 32a und die für die Kfz-Steuer relevanten Fahrzeugdaten 32b, über den Server 19 ausschließlich die Halterdaten 32a und die Fahrzeug spezifischen Wartungsdaten 32c zur Verfügung stehen, wohingegen über den Server 21 die für ein Verkaufsangebot des Fahrzeugs im Internet relevanten Verkaufsdaten 32d zur Verfügung stehen.

## Patentansprüche

1. Verfahren zur Übertragung eines in einem Datenspeicherbereich (17) eines unteren Servers (15) gespeicherten Objektdatensatzes (13) zu einem oberen Server (18, 19, 20, 21), wobei der untere Server und der obere Server in einem zumindest einen oberen Server umfassenden Server-Verbund angeordnet sind, und die Server in vertikal gestaffelten Serverebenen E1, E2, E3, E4 angeordnet sind, wobei die eindeutige Zuordnung des Objektdatensatzes zu einem bestimmten Objekt mittels Adressierung des Server-Datenspeicherbereichs durch einen Zugangsdatensatz (30) erfolgt, der in einem Zugangsdaten-Speicherbereich eines mit dem Objekt verbundenen RFID-Datenträgers abgelegt ist, oder dass der Objektdatensatz aus einem Datenspeicherbereich des RFID-Datenträgers in einen zugeordneten Datenspeicherbereich des unteren Servers übertragen wird, wobei die Übertragung des Objektdatensatzes zum oberen Server durch Zugriff auf den Datenspeicherbereich des unteren Servers erfolgt,
**dadurch gekennzeichnet,**
**dass** der untere Server (15) eine Mehrzahl von einem Objekt zugeordneten Objektdaten oder Objektdatensätzen (31, 32, 33, 34, 35) aufweist, wobei die Objektdaten mittels eines RFID-Datenträgers (11) einem Objekt und die Objektdatensätze mittels einer entsprechenden Anzahl von RFID-Datenträgern einer Mehrzahl unterschiedlicher Objekte eindeutig zugeordnet sind, wobei lediglich der untere Server einen Zugriff auf sämtliche Objektdaten oder Objektdatensätze ermöglicht, und die oberen Server jeweils nur einen Zugriff auf definierte Objektdaten oder Objektdatensätze ermöglichen, derart, dass je weiter oben der jeweilige Server in dem vertikalen Server-Verbund angeordnet ist, desto größer die Anzahl der zugelassenen Nutzer des jeweiligen Servers ist.

2. Verfahren nach Anspruch 1,
**dadurch gekennzeichnet,**
**dass** der untere Server (15) als Gate für die Datenübertragung zwischen dem RFID-Datenträger und dem oberen Server (18) dient.

3. Verfahren nach Anspruch 1 oder 2,
**dadurch gekennzeichnet,**
**dass** der RFID-Datenträger (11) einen Datenspeicherbereich (12) aufweist, und ein Objektdatensatz (13) aus dem Datenspeicherbereich in den Datenspeicherbereich (17) des Servers (15) übertragen wird, wobei eine Datenübertragung zwischen dem RFID-Datenträger und dem oberen Server (18) mittelbar über den unteren Server erfolgt.

4. Verfahren nach Anspruch 3,
**dadurch gekennzeichnet,**
**dass** ein Zugriff auf den Datenspeicherbereich (12) des RFID- Datenträgers (11) über einen Adressbereich (16) des unteren Servers (15) erfolgt.

5. Verfahren nach Anspruch 4,
**dadurch gekennzeichnet,**
**dass** der Zugriff auf den Adressbereich (16) des unteren Servers (15) über einen RFID-Administrator erfolgt.

6. Verfahren nach Anspruch 4 oder 5,
**dadurch gekennzeichnet,**
**dass** der Zugriff auf den Adressbereich (16) des unteren Servers (15) vom RFID-Administrator auf den oberen Server (18, 19, 20, 21) konfiguriert wird.

7. Verfahren nach einem der Ansprüche 3 bis 6,
**dadurch gekennzeichnet,**
**dass** die Zuordnung des Objektdatensatzes (13) zu dem Datenspeicherbereich (17) des unteren Servers (15) über einen den unteren Server identifizierenden Adressdatensatz erfolgt.

8. Verfahren nach Anspruch 7,
**dadurch gekennzeichnet,**
**dass** der Adressdatensatz auf dem RFID-Datenträger (11) gespeichert ist.

9. Verfahren nach einem der vorangehenden Ansprüche,
**dadurch gekennzeichnet,**
**dass** die Datenübertragung zwischen dem RFID-Datenträger (11) und dem unteren Server (15) mittels einer zwei Schnittstellen aufweisenden Leseeinrichtung (14) erfolgt, wobei über die erste Schnittstelle eine Datenverbindung zwischen dem RFID-Datenträger und der Leseeinrichtung und über die zweite Schnittstelle eine Datenverbindung zwischen der Leseeinrichtung und dem unteren Server hergestellt wird.

10. Verfahren nach Anspruch 9,
**dadurch gekennzeichnet,**
**dass** die Zuordnung des Objektdatensatzes (13) zu dem Datenspeicherbereich (17) des unteren Servers (15) über einen den unteren Server identifizierenden und in der Leseeinrichtung (14) gespeicherten Adressdatensatz erfolgt.

11. Verfahren nach Anspruch 9 oder 10,
**dadurch gekennzeichnet,**
**dass** die Leseeinrichtung (14) zur Datenübertragung zwischen dem Adressbereich (16) des unteren Servers und dem Datenspeicherbereich (12) des RFID-Datenträgers (11) dient.

12. Verfahren nach einem der vorangehenden Ansprüche,
**dadurch gekennzeichnet,**
**dass** der Objektdatensatz (13) des RFID-Datenträgers (11) neben einer Kennung des RFID-Datenträgers Authentisierungsdaten aufweist, die über eine Datenverbindung zwischen dem RFID-Datenträger und einer Authentisierungseinrichtung im Datenspeicherbereich des RFID-Datenträgers hinterlegt werden.

13. Verfahren nach einem der vorangehenden Ansprüche,
**dadurch gekennzeichnet,**
**dass** Daten des auf dem RFID-Datenträger gespeicherten Objektdatensatzes (13) unterschiedlichen Speicherplätzen des Datenspeicherbereichs (17) des unteren Servers (15) zugeordnet werden, und der Administrator individuelle Zugriffsberechtigungen für die Speicherplätze des Datenspeicherbereichs definiert.

14. Anordnung (10) zur Durchführung eines Verfahrens nach Anspruch 1 umfassend einen Server-Verbund mit einem unteren Server (15) und oberen Servern (18, 19, 20, 21), wobei die Server in vier vertikal gestaffelten Serverebenen E1, E2, E3, E4 angeordnet und miteinander über Datenverbindungen verbunden sind, wobei der untere Server über eine Datenverbindung mit dem RFID-Datenträger (11) verbunden ist.

15. Anordnung nach Anspruch 14,
**dadurch gekennzeichnet,**
**dass** dem RFID-Datenträger (11) ein Datenspeicherbereich (17) auf dem unteren Server (15) zugeordnet ist, und der untere Server einen Adressbereich (16) aufweist, der zum Zugriff auf den Datenspeicherbereich (12) des RFID-Datenträgers dient.

16. Anordnung nach Anspruch 14 oder 15,
**dadurch gekennzeichnet,**
**dass** zur Datenübertragung zwischen dem unteren Server (15) und dem RFID-Datenträger (11) eine Datenübertragungseinrichtung dient, die eine Leseeinrichtung (14) mit einer ersten Schnittstelle zur Übertragung des Objektdatensatzes (13) des RFID-Datenträgers zur Leseeinrichtung und einer zweiten Schnittstelle zur Übertragung des Datensatzes von der Leseeinrichtung zum unteren Server aufweist.

17. Anordnung nach Anspruch 16,
**dadurch gekennzeichnet,**
**dass** die erste Schnittstelle als NFC-Schnittstelle ausgebildet ist.

18. Anordnung nach Anspruch 17,
**dadurch gekennzeichnet,**
**dass** die erste Schnittstelle als UHF-Schnittstelle ausgebildet ist.

19. Anordnung nach einem der Ansprüche 16 bis 18,
**dadurch gekennzeichnet,**
**dass** die zweite Schnittstelle als Funkschnittstelle ausgebildet ist.

20. Anordnung nach einem der Ansprüche 16 bis 18,
**dadurch gekennzeichnet,**
**dass** die Datenübertragungseinrichtung als Mobilfunkgerät ausgebildet ist.

21. Anordnung nach einem der Ansprüche 16 bis 20,
**dadurch gekennzeichnet, dass** die Leseeinrichtung (14) zur Darstellung des Speichereinhalts oder von Statusinformationen des RFID-Datenträgers (11) dient.

22. Anordnung nach einem der Ansprüche 14 bis 21,
**dadurch gekennzeichnet,**
**dass** der obere Server (18, 19, 20, 21) als Netzwerk-Server eines globalen Netzwerks ausgebildet ist.

## Claims

1. A method for transferring an object data set (13) stored in a data storage area (17) of a lower server (15) to an upper server (18, 19, 20, 21), the lower server and the upper server being installed in a server cluster comprising at least one upper server, and the servers being arranged in vertically staggered server levels E1, E2, E3, E4, the unique allocation of the object data set to a specific object being performed either by addressing the server data storage area with an access data set (30) stored in an access data storage area of an RFID data carrier attached to the object or by transferring the object data set from a data storage area of the RFID data carrier to an allocated data storage area of the lower server, transferal of the object data set to the upper server being performed by accessing the data storage area of the lower server,
**characterised in that**
the lower server (15) has a plurality of object data or object data sets (31, 32, 33, 34, 35) allocated to an object, the object data being uniquely allocated to one object by means of an RFID data carrier (11) and the object data sets being uniquely allocated to a plurality of different objects by means of a corresponding number of RFID data carriers, only the lower server providing access to all of the object data or object data sets, and the upper servers each providing access only to defined object data or object data sets in such a manner that the higher a server is arranged in the vertical server cluster, the higher the number of authorised users of that server is.

2. The method according to claim 1,
**characterised in that**
the lower server (15) serves as a gate for the data transfer between the RFID data carrier and the upper server (18).

3. The method according to claim 1 or 2,
**characterised in that**
the RFID data carrier (11) has a data storage area (12) and an object data set (13) is transferred from the data storage area to the data storage area (17) of the server (15), a data transfer between the RFID data carrier and the upper server (18) taking place indirectly by way of the lower server.

4. The method according to claim 3,
**characterised in that**
the data storage area (12) of the RFID data carrier (11) is accessed via an address area (16) of the lower server (15).

5. The method according to claim 4,
**characterised in that**
the address area (16) of the lower server (15) is accessed via an RFID administrator.

6. The method according to claim 4 or 5,
**characterised in that**
access to the address area (16) of the lower server (15) is configured onto the upper server (18, 19, 20, 21) by the RFID administrator.

7. The method according to any one of claims 3 to 6,
**characterised in that**
the object data set (13) is allocated to the data storage area (17) of the lower server (15) via an address data set identifying the lower server.

8. The method according to claim 7,
**characterised in that**
the address data set is stored on the RFID data carrier (11).

9. The method according to any one of the preceding claims,
**characterised in that**
data is transferred between the RFID data carrier (11) and the lower server (15) by means of a reader device (14) comprising two interfaces, a data connection between the RFID data carrier and the reader device being established via the first interface and a data connection between the reader device and the lower server being established via the second interface.

10. The method according to claim 9,
**characterised in that**
the object data set (13) is allocated to the data storage area (17) of the lower server (15) via an address data set stored in the reader device (14) and identifying the lower server.

11. The method according to claim 9 or 10,
**characterised in that**
the reader device (14) serves to transfer data between the address area (16) of the lower server and the data storage area (12) of the RFID data carrier (11).

12. The method according to any one of the preceding claims,
**characterised in that**
the object data set (13) of the RFID data carrier (11) has authentication data in addition to an identification code of the RFID data carrier, said authentication data being stored in the data storage area of the RFID data carrier via a data connection between the RFID data carrier and an authentication device.

13. The method according to any one of the preceding claims,
**characterised in that**
data of the object data set (13) stored on the RFID data carrier are allocated to different storage locations of the data storage area (17) of the lower server (15), and the administrator defines individual access rights for the storage locations of the data storage area.

14. An arrangement (10) for executing a method according to claim 1, the arrangement comprising a server cluster having a lower server (15) and upper servers (18, 19, 20, 21), the servers being arranged in four vertically staggered server levels E1, E2, E3, E4 and the servers being connected to each other via data connections, the lower server being connected to the RFID data carrier (11) via a data connection.

15. The arrangement according to claim 14,
**characterised in that**
a data storage area (17) on the lower server (15) is allocated to the RFID data carrier (11), and the lower server has an address area (16) for accessing the data storage area (12) of the RFID data carrier.

16. The arrangement according to claim 14 or 15,
**characterised in that**
a data transfer device serves to transfer data between the lower server (15) and the RFID data carrier (11), said data transfer device comprising a reader device (14) having a first interface for transferring the object data set (13) of the RFID data carrier to the reader device and a second interface for transferring the data set from the reader device to the lower server.

17. The arrangement according to claim 16,
**characterised in that**
the first interface is an NFC interface.

18. The arrangement according to claim 17,
**characterised in that**
the first interface is a UHF-interface.

19. The arrangement according to any one of claims 16 to 18,
**characterised in that**
the second interface is a radio interface.

20. The arrangement according to any one of claims 16 to 18,
**characterised in that**
the data transfer device is a mobile radio device.

21. The arrangement according to any one of claims 16 to 20,
**characterised in that**
the reader device (14) serves to display the storage content or status information of the RFID data carrier (11).

22. The arrangement according to any one of claims 14 to 21,
**characterised in that**
the upper server (18, 19, 20, 21) is a network server of a global network.

## Revendications

1. Procédé de transmission d'un jeu de données d'objet (13) enregistré dans une zone de mémoire de données (17) d'un serveur inférieur (15) à un serveur supérieur (18, 19, 20, 21), le serveur inférieur et le serveur supérieur étant disposés dans un assemblage de serveurs comprenant au moins un serveur supérieur, et les serveurs étant disposés sur des niveaux de serveur E1, E2, E3, E4 échelonnés verticalement, le jeu de données d'objet étant associé à un objet spécifique de manière unique en adressant la zone de mémoire de données de serveur par un jeu de données d'accès (30) enregistré dans une zone de mémoire de données d'accès d'un support de données RFID connecté à l'objet ou que le jeu de données d'objet est transmis d'une zone de mémoire de données du support de données RFID à une zone de mémoire de données associée du serveur inférieur, le jeu de données d'objet étant transmis au serveur supérieur en accédant à la zone de mémoire de données du serveur inférieur,
**caractérisé en ce que**
le serveur inférieur (15) a une pluralité de données d'objet ou de jeux de données d'objet (31, 32, 33, 34, 35) associés à un objet, les données d'objet étant associées uniquement à un objet au moyen d'un support de données RFID (11) et les jeux de données d'objet étant associés uniquement à une pluralité d'objets différents au moyen d'un nombre de supports de données RFID correspondant, seulement le serveur inférieur donnant accès à toutes les données d'objet ou tous les jeux de données d'objet, et chaque serveur supérieur donnant accès seulement à des données d'objet définies ou à des jeux de données d'objet définis d'une telle manière que plus le serveur respectif est supérieur dans l'assemblage vertical de serveurs plus le nombre d'utilisateurs autorisés de ce serveur est élevé.

2. Procédé selon la revendication 1,
**caractérisé en ce que**
le serveur inférieur (15) sert de porte pour la transmission de données entre le support de données RFID et le serveur supérieur (18).

3. Procédé selon la revendication 1 ou 2,
**caractérisé en ce que**
le support de données RFID (11) a une zone de mémoire de données (12), et un jeu de données d'objet (13) est transmis de la zone de mémoire de données à la zone de mémoire de données (17) du serveur (15), la transmission de données entre le support de données RFID et le serveur supérieur (18) s'effectuant indirectement par le serveur inférieur.

4. Procédé selon la revendication 3,
**caractérisé en ce**
**qu'**un accès à la zone de mémoire de données (12) du support de données RFID (11) s'effectue par une zone d'adresse (16) du serveur inférieur (15).

5. Procédé selon la revendication 4,
**caractérisé en ce que**
l'accès à la zone d'adresse (16) du serveur inférieur (15) s'effectue par un administrateur RFID.

6. Procédé selon la revendication 4 ou 5,
**caractérisé en ce que**
l'accès à la zone d'adresse (16) du serveur inférieur (15) est configuré sur le serveur supérieur (18, 19, 20, 21) par l'administrateur RFID.

7. Procédé selon l'une quelconque des revendications 3 à 6,
**caractérisé en ce que**
le jeu de données d'objet (13) est associé à la zone de mémoire de données (17) du serveur inférieur (15) par un jeu de données d'adresse identifiant le serveur inférieur.

8. Procédé selon la revendication 7,
**caractérisé en ce que**
le jeu de données d'adresse est enregistré sur le support de données RFID (11).

9. Procédé selon l'une quelconque des revendications précédentes,
**caractérisé en ce que**
la transmission de données entre le support de données RFID (11) et le serveur inférieur (15) s'effectue au moyen d'un dispositif de lecture (14) comprenant deux interfaces, une connexion de données entre le support de données RFID et le dispositif de lecture étant établie par la première interface et une connexion de données entre le dispositif de lecture et le serveur inférieur étant établie par la deuxième interface.

10. Procédé selon la revendication 9,
**caractérisé en ce que**
le jeu de données d'objet (13) est associé à la zone de mémoire de données (17) du serveur inférieur (15) par un jeu de données d'adresse identifiant le serveur inférieur et enregistré dans le dispositif de lecture (14).

11. Procédé selon la revendication 9 ou 10,
**caractérisé en ce que**
le dispositif de lecture (14) sert à transmettre des données entre la zone d'adresse (16) du serveur inférieur et la zone de mémoire de données (12) du support de données RFID (11).

12. Procédé selon l'une quelconque des revendications précédentes,
**caractérisé en ce que**
le jeu de données d'objet (13) du support de données RFID (11) a des données d'authentification en plus d'un identificateur du support de données RFID, lesdites données d'authentification étant enregistrées dans la zone de mémoire de données du support de données RFID par une connexion de données entre le support de données RFID et un dispositif d'authentification.

13. Procédé selon l'une quelconque des revendications précédentes,
**caractérisé en ce que**
des données du jeu de données d'objet (13) enregistré sur le support de données RFID sont associées à des emplacements de mémoire différents de la zone de mémoire de données (17) du serveur inférieur (15), et l'administrateur définit des droits d'accès individuels pour les emplacements de mémoire de la zone de mémoire de données.

14. Ensemble (10) destiné à exécuter un procédé selon la revendication 1, l'ensemble comprenant un assemblage de serveurs comprenant un serveur inférieur (15) et des serveurs supérieurs (18, 19, 20, 21), les serveurs étant disposés sur quatre niveaux de serveur E1, E2, E3, E4 échelonnés verticalement et les serveurs étant reliés par des connexions de données, le serveur inférieur étant connecté au support de données RFID (11) par une connexion de données.

15. Ensemble selon la revendication 14,
**caractérisé en ce**
**qu'**une zone de mémoire de données (17) sur le serveur inférieur (15) est associée au support de données RFID (11), et le serveur inférieur a une zone d'adresse (16) pour accéder à la zone de mémoire de données (12) du support de données RFID.

16. Ensemble selon la revendication 14 ou 15,
**caractérisé en ce**
**qu'**un dispositif de transmission de données sert à transmettre des données entre le serveur inférieur (15) et le support de données RFID (11), ledit dispositif de transmission de données comprenant un dispositif de lecture (14) ayant une première interface pour transmettre le jeu de données d'objet (13) du support de données RFID au dispositif de lecture et une deuxième interface pour transmettre le jeu de données du dispositif de lecture au serveur inférieur.

17. Ensemble selon la revendication 16,
**caractérisé en ce que**
la première interface est une interface NFC.

18. Ensemble selon la revendication 17,
**caractérisé en ce que**
la première interface est une interface UHF.

19. Ensemble selon l'une quelconque des revendications 16 à 18,
**caractérisé en ce que**
la deuxième interface est une interface radio.

20. Ensemble selon l'une quelconque des revendications 16 à 18,
**caractérisé en ce que**
le dispositif de transmission de données est un dispositif de radio mobile.

21. Ensemble selon l'une quelconque des revendications 16 à 20,
**caractérisé en ce que**
le dispositif de lecture (14) sert à afficher le contenu de la mémoire ou des informations d'état du support de données RFID (11).

22. Ensemble selon l'une quelconque des revendications 14 à 21,
**caractérisé en ce que**
le serveur supérieur (18, 19, 20, 21) est un serveur réseau d'un réseau global.
